# EUROPÄISCHE PATENTSCHRIFT

(11) **EP 2 641 133 B1**
(45) Veröffentlichungstag und Bekanntmachung des Hinweises auf die Patenterteilung: **10.09.2014**
(21) Anmeldenummer: 10779543.7
(22) Anmeldetag: 16.11.2010
(51) Int. Cl.: G05B 11/32

(54) **REGELEINRICHTUNG**
CONTROL DEVICE
DISPOSITIF DE RÉGULATION

(43) Veröffentlichungstag der Anmeldung: 25.09.2013
(73) Patentinhaber: Siemens Aktiengesellschaft, 80333 München (DE)
(72) Erfinder: KUPRIJANOV, Artur, 31126 Visaginas (LT); LÜBBERT, Andreas, 30966 Hemmingen (DE); PFEIFFER, Bernd-Markus, 76744 Wörth (DE); SCHAEPE, Sebastian, 06108 Halle (DE); SIMUTIS, Rimvydas, 46307 Kaunas (LT)
(86) Internationale Anmeldenummer: PCT/EP2010/067597
(87) Internationale Veröffentlichungsnummer: WO 2012/065631

(56) Entgegenhaltungen:
- WO-A1-03/067342
- DE-A1- 2 046 990
- US-A- 4 059 745

## Beschreibung

Die Erfindung betrifft eine Regeleinrichtung für einen Prozess, in welchem eine Regelgröße mit Hilfe von mehreren verschiedenen Stellgliedern beeinflussbar ist, gemäß dem Oberbegriff des Anspruchs 1.

In prozess- oder verfahrenstechnischen Anlagen tritt häufig der Fall auf, dass für die Beeinflussung einer Regelgröße zwei Stellglieder zur Verfügung stehen, die sich in ihrer Wirkung gegenseitig ergänzen. Jede Stellgröße, die auf eines der beiden Stellglieder geführt ist, hat für sich alleine, das heißt ohne Unterstützung durch die jeweils andere Stellgröße, nicht genügend Einfluss auf den Prozess, um die Regelgröße in allen Betriebszuständen auf dem Sollwert zu halten. Die beiden Stellgrößen können sich zudem im Hinblick auf die Geschwindigkeit, mit der sie auf den Prozess einwirken, sowie im Hinblick auf die Kosten und unerwünschten Nebenwirkungen, mit welchen ein Stelleingriff verbunden sein kann, unterscheiden. Im Normalfall sollen beide Stellgrößen gleichzeitig aktiv sein.

Als Beispiel sei die Regelung des Sauerstoff-Partialdrucks in einem Bioreaktor genannt, der oft auch als Fermenter bezeichnet wird. Der Sauerstoff-Partialdruck als Regelgröße, welcher dem Sauerstoffgehalt der im Fermenter befindlichen Brühe entspricht, kann sowohl durch die Einblasung von Luft oder Sauerstoff mit Hilfe eines ersten Stellglieds als auch durch Veränderung der Rührerdrehzahl mittels eines zweiten Stellglieds beeinflusst werden. Dabei soll sich der Rührer immer drehen und es soll permanent Frischluft zugeführt werden. Zur Schonung der lebenden Zellen im Reaktor darf jedoch nicht zu stark gerührt und auch nicht zu viel Luft eingeblasen werden.

Eine mögliche Vorgehensweise bei der Regelung eines derartigen Prozesses wäre eine teilweise Automatisierung, bei welcher ein konventioneller PID-Regler eine erste Stellgröße für eines der beiden Stellglieder erzeugt und eine zweite Stellgröße im Handbetrieb vorgegeben wird. Falls das Regelungsziel mit dem aktuellen Vorgabewert nicht mehr erreicht werden kann, wird durch eine Alarmmeldung ein Anlagenfahrer darüber informiert, der bei Bedarf in einem manuellen Eingriff die zweite Stellgröße verändern kann. Im Rahmen von Rezeptsteuerungen können derartige Eingriffe in bestimmten Phasen der Herstellung einer Charge automatisiert vorgenommen werden, falls ihre Notwendigkeit im Rezeptablauf vorhersehbar ist.

Aus dem Funktionshandbuch "SIMATIC Prozessleitsystem PCS 7, PCS 7 Advanced Process Library V71" 03/2009, A5E02102721-01, der Siemens AG ist eine so genannte "Split-Range-Regelung" als Lösung eines etwas anders gelagerten Problems bekannt. Mit Hilfe eines "Split-Range-Bausteins" hinter dem Reglerausgang kann ein PID-Regler seinen Stellwert auf mehrere verschiedene Stellglieder verteilen, die mit verschiedenen physikalischen Prinzipien und in verschiedener Richtung auf dieselbe Regelgröße einwirken. Ein typisches Beispiel ist die Temperaturregelung in einem Reaktor mit Heizung über ein Frischdampfventil und Kühlung über ein Kühlwasserventil. Abhängig vom Vorzeichen der Regeldifferenz kann der Regler Heizenergie oder Kühlenergie anfordern, das heißt, er kann mit einem bidirektionalen Ausgang arbeiten, obwohl jedes einzelne Stellglied nur unipolar, das heißt in einer Wirkrichtung, betrieben werden kann. Bei der bekannten Split-Range-Regelung ist somit entweder das eine oder das andere Stellglied aktiv, aber nicht beide zugleich, da beide in unterschiedlichen Richtungen wirken. In diesem Beispiel macht es nämlich keinen Sinn, gleichzeitig zu heizen und zu kühlen.

Aus der WO 03/067342 A1 ist eine Regeleinrichtung mit zwei parallelen Reglern bekannt, die mit dem gleichen Sollwert beaufschlagt werden und gemeinsam ein Stellglied steuern.

Der Erfindung liegt die Aufgabe zugrunde, eine Regeleinrichtung für einen Prozess, in welchem eine Regelgröße mit Hilfe von mehreren verschiedenen Stellgliedern beeinflussbar ist, zu schaffen, die es in einfacher Weise ermöglicht, zwei Stellglieder zu betreiben, welche dieselbe Wirkrichtung besitzen und gleichzeitig aktiv sein können.

Zur Lösung dieser Aufgabe weist die neue Regeleinrichtung der eingangs genannten Art die im kennzeichnenden Teil des Anspruchs 1 angegebenen Merkmale auf. In den abhängigen Ansprüchen sind vorteilhafte Weiterbildungen der Erfindung, im Anspruch 6 ein Regelungsverfahren, in den Ansprüchen 7 und 8 ein entsprechendes Computerprogramm bzw. ein Computerprogrammprodukt beschrieben.

Mit anderen Worten besteht die grundlegende Idee der neuen Regeleinrichtung darin, für beide Stellglieder einen separaten Regler, insbesondere einen separaten PID-Regler, vorzusehen, die beide mit derselben Regelgröße beaufschlagt werden und beide - wie auch die Stellglieder - denselben Wirkungssinn haben. Beide Regler sind permanent mit ihrem jeweiligen Stellglied verbunden. Durch Vorgabe geeigneter Stellgrößenbegrenzungen wird sichergestellt, dass beide Stellglieder nicht ganz abgeschaltet werden. Je nach Applikation, das heißt je nach Art des Prozesses und der verwendeten Stellglieder, wird entschieden, welche Stellgröße die primäre und somit welcher Regler der primäre Regler sein sollen. Solange der primäre Regler mit seinem Stellbereich, der durch die vorgegebenen Stellgrößenbegrenzungen festgelegt ist, in der Lage ist, einen beispielsweise durch einen Bediener vorgegebenen Sollwert zu erreichen, bleibt der zweite Regler, welcher auch als sekundärer Regler bezeichnet werden kann, im Nachführbetrieb mit konstanter Stellgröße. Sobald der primäre Regler an eine seiner Grenzen des Stellbereichs stößt, wird der sekundäre Regler zusätzlich aktiviert, das heißt er wird vom Nachführbetrieb in den Automatikbetrieb genommen.

Gegenüber der eingangs beschriebenen, nur teilweise automatisierten Regeleinrichtung oder im Vergleich zu Rezeptsteuerungen hat die neue Regeleinrichtung den Vorteil, dass sie in der Lage ist, bei Stellgliedern, welche dieselbe Wirkrichtung besitzen, vollautomatisch und autark zu arbeiten. Wenn die Regeleinrichtung mit den darin verwendeten Reglern einmal korrekt parametriert ist, erfordert sie während ihres Betriebs keine weitere Aufmerksamkeit mehr von einem Bediener und es müssen z. B. bei einer Mehrproduktanlage keine speziellen Vorkehrungen mehr getroffen werden. Durch die Verwendung mehrerer Regler, die auf eine gemeinsame Regelgröße wirken, können jeweils unterschiedliche Stellglieder gemeinsam eingesetzt werden, um ein bestimmtes Regelungsziel somit schneller als bisher zu erreichen. Da es sich um verschiedene Regler handeln kann, die jeweils individuell parametriert werden, kann jeder Regler bezüglich seiner Dynamik auf das Verhalten des jeweils zugeordneten Stellglieds angepasst werden. Da die beiden Stellglieder typischerweise mit unterschiedlichen physikalischen Wirkprinzipien arbeiten, die zudem unterschiedlich schnell auf den Prozess einwirken, sind typischerweise auch unterschiedliche Parametersätze für die Regler erforderlich. Eine Inbetriebnahme der Regler, bei welcher die jeweils optimalen Parameter für die Regler ermittelt werden, kann in besonders einfacher Weise durchgeführt werden, indem jeweils nur einer von den mehreren Reglern aktiviert wird, während die jeweils anderen in Handbetrieb geschaltet sind, so dass letztere einen konstant vorgegebenen Wert der Stellgröße ausgeben. Dadurch können bekannte Verfahren zur rechnergestützten Inbetriebnahme von Reglern, beispielsweise der so genannte PID-Tuner, der in das Engineering-System des bekannten Prozessleitsystems SIMATIC PCS 7 integriert ist, zum Einsatz gebracht werden.

Ein weiterer Vorteil ist darin zu sehen, dass für die Regler nur ein gemeinsamer Sollwert vorgegeben werden muss, der für alle Regler der gleiche ist, wodurch sich die Bedienung der Regler in der Anlage erheblich erleichtert.

In einer vorteilhaften Weiterbildung der Erfindung sind die Grenzwerte für die Stellgrößenbegrenzung des jeweiligen primären Reglers in Abhängigkeit des jeweiligen Prozesszustands oder der Zeit veränderbar. Damit kann auf besondere Gegebenheiten beim Betrieb der Anlage reagiert werden, zum Beispiel, wenn der Betrieb der Stellglieder mit unterschiedlichem Ressourcenverbrauch verbunden ist und zum Beispiel Energiekosten zeitabhängig variabel sind.

Durch eine Rückverschaltung des Stellgrößenausgangs auf den Vorgabewert für das Nachführen im Nachführbetrieb, bei welcher die Stellgröße des sekundären Reglers auf seinen Eingang für den Vorgabewert geführt ist, wird in vorteilhafter Weise erreicht, dass der sekundäre Regler bei der Umschaltung von Automatikbetrieb in den Nachführbetrieb den zuvor gültigen Stellwert übernimmt und danach konstant hält. Dies bewirkt ein stoßfreies Umschalten des sekundären Reglers.

In einer weiteren vorteilhaften Ausgestaltung der Erfindung ist der sekundäre Regler derart ausgestaltet, dass ein Bediener diesen in Handbetrieb schalten kann, in welchem der Stellwert durch den Bediener vorgebbar ist. Durch eine Priorität von Handbetrieb gegenüber Nachführen wird ermöglicht, dass dem jeweils sekundären Regler ein gewünschter, konstanter Stellwert vorgegeben werden kann, der solange stehen bleibt, bis der sekundäre Regler von dieser Betriebsart in den Automatikbetrieb umgeschaltet wird. Vorteilhaft ist zudem eine Logikschaltung, mit welcher die Auswahl, welcher der Regler aktuell als primärer Regler arbeiten soll, flexibel vorgegeben und sogar während des Betriebs der Regeleinrichtung geändert werden kann.

Ein Verfahren zur Regelung eines Prozesses, welches mit der Regeleinrichtung durchführbar ist, ist bevorzugt in Software oder einer Kombination von Soft-/Hardware implementiert, so dass die Erfindung auch ein Computerprogramm mit durch einen Computer ausführbaren Programmcodeanweisungen zur Implementierung des Verfahrens betrifft. In diesem Zusammenhang betrifft die Erfindung auch ein Computerprogrammprodukt, insbesondere einen Datenträger oder ein Speichermedium, mit einem durch einen Computer ausführbaren derartigen Computerprogramm. Ein solches Computerprogramm ist bevorzugt Bestandteil eines Automatisierungsgeräts, durch welches die Regeleinrichtung realisiert ist, oder wird in einem Speicher des Automatisierungsgeräts vorgehalten oder ist in diesen Speicher ladbar, so dass beim Betrieb des Automatisierungsgeräts dieses das Verfahren zur Regelung des Prozesses automatisch ausführt.

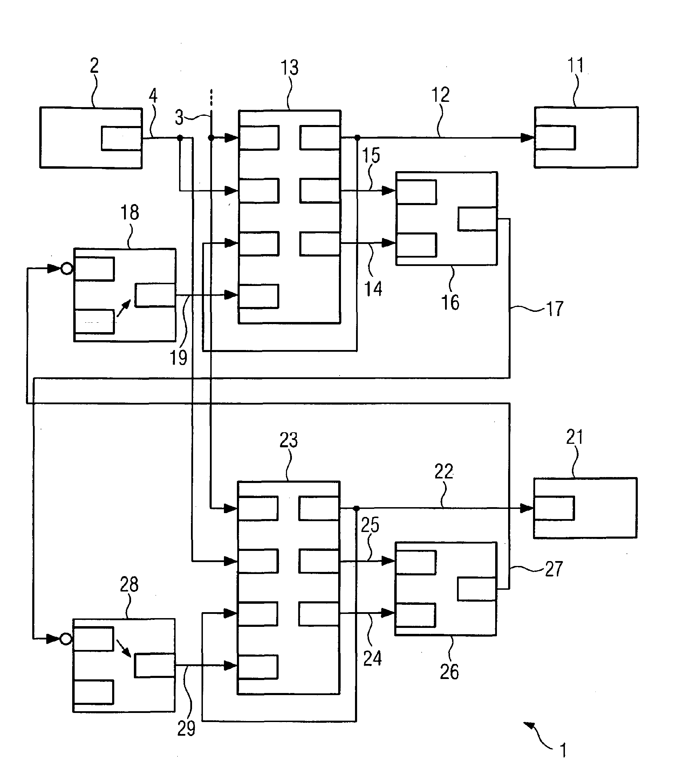

Anhand der Zeichnung, in welcher ein Ausführungsbeispiel der Erfindung dargestellt ist, werden im Folgenden die Erfindung sowie Ausgestaltungen und Vorteile näher erläutert.

Die einzige Figur zeigt ein Blockschaltbild mit verschiedenen Funktionsblöcken, aus welchen eine Regeleinrichtung 1 aufgebaut sein kann. Zur Einbindung der Regeleinrichtung 1 in einen nicht weiter dargestellten Regelkreis mit einem Prozess, beispielsweise einem Bioreaktor, dienen ein Messglied 2, zum Beispiel ein Sensor zur Erfassung des Sauerstoff-Partialdrucks, sowie ein erstes Stellglied 11, zum Beispiel ein Ventil zur Mengeneinstellung einer Lufteinblasung, und ein zweites Stellglied 21, zum Beispiel ein Rührwerk mit vorgeschalteter Drehzahlregelung. Dem ersten Stellglied 11 ist zur Erzeugung einer ersten Stellgröße 12 ein erster PID-Regler 13, dem zweiten Stellglied 21 zur Erzeugung einer zweiten Stellgröße 22 ein zweiter PID-Regler 23 vorgeschaltet. Durch Bedieneingabe wird den beiden Reglern 13 und 23 ein Sollwert 3 für die mit Hilfe des Messglieds 2 erfasste Regelgröße 4 vorgegeben, die ebenfalls beiden Reglern 13 und 23 zugeführt ist. Anhand Sollwert 3 und Regelgröße 4 berechnen die beiden Regler 13 und 23 eine Regeldifferenz, welche intern zur Bestimmung der ersten Stellgröße 12 bzw. der zweiten Stellgröße 22 entsprechend dem jeweils im ersten Regler 13 oder im zweiten Regler 23 parametrierten Regelalgorithmus benötigt wird, falls der jeweilige Regler im Automatikbetrieb arbeitet.

In einer nicht näher dargestellten Stellgrößenbegrenzungseinrichtung sind im ersten Regler 13 sowie im zweiten Regler 23 verschiedene Grenzwerte für die Untergrenzen und die Obergrenzen ihrer Stellbereiche hinterlegt. Erreicht die erste Stellgröße 12 des ersten Reglers 13 den unteren Grenzwert der ersten Stellgröße 12, so wird dies durch einen High-Pegel eines Anzeigesignals 14 einer Logikschaltung mit einem ersten Oder-Glied 16 angezeigt. Zur Anzeige des Erreichens eines oberen Grenzwerts dient ein Anzeigesignal 15. In entsprechender Weise ist auch der zweite Regler 23 mit einem zweiten Oder-Glied 26 verschaltet, auf welches Anzeigesignale 24 und 25 für das Erreichen eines unteren Grenzwerts bzw. eines oberen Grenzwerts des Stellbereichs des zweiten Reglers 23 geführt sind. Das logische Ausgangssignal 17 des ersten Oder-Glieds 16 ist über eine logische Negation, die durch einen Kreis symbolisiert ist, auf einen ersten Eingang eines ersten Selektors 28 geführt. Im dargestellten Schaltungszustand des Selektors 28 wird das negierte logische Signal 17 auf den Selektorausgang durchgeschaltet und als Aktivierungssignal 29 auf einen Eingang zur Aktivierung des Nachführbetriebs des zweiten Reglers 23 bei High-Pegel geführt. In entsprechender Weise wird ein zweites logisches Ausgangssignal 27 bei einer vom dargestellten Zustand abweichenden Stellung eines zweiten Selektors 18 zur Erzeugung eines Aktivierungssignals 19 für einen Nachführbetrieb des ersten Reglers 13 herangezogen. Im dargestellten Schaltzustand des Selektors 18 liefert dieser an seinem Ausgang ein Aktivierungssignal 19 mit Low-Pegel, so dass der Regler 13 als primärer Regler im Automatikbetrieb arbeitet.

Die erste Stellgröße 12 ist zusätzlich zu ihrer Aufschaltung auf das erste Stellglied 11 auf einen Eingang des ersten Reglers 13 für einen Vorgabewert geführt, welcher im Nachführbetrieb als erste Stellgröße 12 ausgegeben wird. Entsprechendes gilt für die durch den zweiten Regler 23 erzeugte zweite Stellgröße 22.

In der jeweils durch einen Pfeil in den Selektoren 18 und 28 symbolisierten Selektorstellung ist der erste Regler 13 der primäre Regler, der ständig im Automatikbetrieb arbeitet. Der zweite Regler 23 befindet sich beispielsweise im Nachführbetrieb und gibt einen konstanten Wert für die zweite Stellgröße 22 aus. Wenn der erste Regler 13 mit seiner Stellgröße 12 an die obere oder untere Begrenzung stößt, wird dies durch High-Pegel auf dem Anzeigesignal 15 bzw. dem Anzeigesignal 14 angezeigt und das erste Oder-Glied 16 schaltet über den zweiten Selektor 28 einen Low-Pegel auf das Aktivierungssignal 29, so dass der Nachführbetrieb des zweiten Reglers 23 deaktiviert wird und er somit zur Unterstützung des ersten Reglers 13 in Automatikbetrieb schaltet. Falls der erste Regler 13 die Begrenzung des Stellbereichs wieder verlässt, geht der zweite Regler 23 zurück in Nachführbetrieb und zwar so, dass der zuletzt ausgegebene Wert der zweiten Stellgröße 22 konstant gehalten wird.

Die in den Stellgrößenbegrenzungseinrichtungen des ersten Reglers 13 und des zweiten Reglers 23 hinterlegten Grenzwerte für den jeweiligen Stellbereich können statisch oder alternativ dazu variabel sein, sodass sie abhängig vom Verlauf des Prozesses oder beispielsweise bestimmt durch ökonomische Gesichtspunkte verändert werden.

Am ersten Regler 13 sowie am zweiten Regler 23 hat die Betriebsart Handbetrieb Priorität vor der Betriebsart Nachführen, so dass im Handbetrieb für den jeweils sekundären Regler eine Vorgabe für den konstanten Wert der jeweiligen Stellgröße gemacht werden kann.

Durch die Rückverschaltung der ersten Stellgröße 12 bzw. der zweiten Stellgröße 22 auf den Nachführeingang des ersten Reglers 13 bzw. des zweiten Reglers 23 merkt sich der jeweilige Regler den zuletzt ausgegebenen Wert der Stellgröße 12 bzw. 22 und hält ihn konstant, solange der Nachführbetrieb aktiviert ist.

Die beiden Selektoren 18 und 28 werden immer gegenläufig verstellt. Falls der zweite Regler 23 der primäre Regler werden soll, werden die Selektoren 18 und 28 beide abweichend vom dargestellten Zustand eingestellt, so dass nur der Aktivierungseingang für Nachführbetrieb des ersten Reglers 13 angesprochen wird, nicht dagegen der entsprechende Aktivierungseingang des zweiten Reglers 23. Durch die symmetrisch aufgebaute Logikschaltung, bestehend aus den beiden Oder-Gliedern 16, 26 und den beiden Selektoren 18, 28 wird es ermöglicht, im laufenden Betrieb die Entscheidung zu modifizieren, welcher der beiden Regler 13 oder 23 der aktuell primäre Regler sein soll.

## Patentansprüche

1. Regeleinrichtung (1) für einen Prozess, in welchem eine Regelgröße (4) mit Hilfe von mehreren verschiedenen Stellgliedern (11, 21), die insbesondere auf verschiedenen physikalischen Prinzipien basieren, beeinflussbar ist, **dadurch gekennzeichnet,**
**dass** einem ersten Stellglied (11) ein erster Regler (13) zur Erzeugung einer ersten Stellgröße (12) und einem zweiten Stellglied (21), welches dieselbe Wirkrichtung wie das erste Stellglied (11) besitzt, ein zweiter Regler (23) zur Erzeugung einer zweiten Stellgröße (22) vorgeschaltet ist,
**dass** dem ersten und dem zweiten Regler (13, 23) der Sollwert (3) und die Regelgröße (4) zugeführt sind,
**dass** sich der erste Regler (13) als primärer Regler im Automatikbetrieb befindet und mit einer Stellgrößenbegrenzungseinrichtung mit vorgegebenen oder vorgebbaren Grenzwerten für die erste Stellgröße (12) versehen ist,
**dass** der zweite Regler (23) zwischen Automatikbetrieb und einem Nachführbetrieb, in welchem er einen vorgegebenen oder vorgebbaren konstanten Wert der zweiten Stellgröße (22) erzeugt, umschaltbar ist und
**dass** eine Logikschaltung (16, 26, 18, 28) vorhanden ist, die dazu ausgebildet ist, den zweiten Regler (23) in den Automatikbetrieb zu schalten, falls ein Grenzwert der ersten Stellgröße (12) erreicht wird, und andernfalls den zweiten Regler (23) in den Nachführbetrieb zu schalten.

2. Regeleinrichtung nach Anspruch 1, **dadurch gekennzeichnet, dass** die Grenzwerte für die erste Stellgröße (12) in Abhängigkeit des jeweiligen Prozesszustands oder der Zeit veränderbar sind.

3. Regeleinrichtung nach Anspruch 1 oder 2, **dadurch gekennzeichnet, dass** die zweite Stellgröße (22) auf einen Eingang des zweiten Reglers (23) für einen Vorgabewert der Stellgröße im Nachführbetrieb geführt ist.

4. Regeleinrichtung nach einem der vorhergehenden Ansprüche, **dadurch gekennzeichnet, dass** der zweite Regler (23) durch einen Bediener manuell in Handbetrieb schaltbar ist.

5. Regeleinrichtung nach einem der vorhergehenden Ansprüche, **dadurch gekennzeichnet, dass** der zweite Regler (23) mit einer Stellgrößenbegrenzungseinrichtung mit vorgegebenen oder vorgebbaren Grenzwerten für die zweite Stellgröße (22) versehen ist,
dass der erste Regler (13) zwischen Automatikbetrieb und einem Nachführbetrieb, in welchem er einen vorgegebenen oder vorgebbaren konstanten Wert der ersten Stellgröße (12) erzeugt, umschaltbar ist und
dass die Logikschaltung (16, 26, 18, 28) weiterhin dazu ausgebildet ist, den zweiten Regler (23) in Automatikbetrieb zu schalten, so dass dieser als primärer Regler betrieben wird, sowie den ersten Regler, der dann nicht mehr als primärer Regler betrieben wird, in den Automatikbetrieb zu schalten, falls ein Grenzwert der zweiten Stellgröße (22) erreicht wird, und andernfalls den ersten Regler (13) in den Nachführbetrieb zu schalten.

6. Verfahren zur Regelung eines Prozesses, in welchem eine Regelgröße (4) mit Hilfe von mehreren verschiedenen Stellgliedern (11, 21), die insbesondere auf verschiedenen physikalischen Prinzipien basieren, beeinflussbar ist, mit einer Regeleinrichtung, in welcher einem ersten Stellglied (11) ein erster Regler (13) zur Erzeugung einer ersten Stellgröße (12) und einem zweiten Stellglied (21), welches dieselbe Wirkrichtung wie das erste Stellglied (11) besitzt, ein zweiter Regler (23) zur Erzeugung einer zweiten Stellgröße (22) vorgeschaltet ist, **dadurch gekennzeichnet,**
**dass** dem ersten und dem zweiten Regler (13, 23) der Sollwert (3) und die Regelgröße (4) zugeführt werden, dass der erste Regler (13) als primärer Regler in einem Automatikbetrieb arbeitet und mit einer Stellgrößenbegrenzungseinrichtung mit vorgegebenen oder vorgebbaren Grenzwerten für die erste Stellgröße (12) versehen ist,
**dass** der zweite Regler (23) zwischen Automatikbetrieb und einem Nachführbetrieb, in welchem er einen vorgegebenen oder vorgebbaren konstanten Wert der zweiten Stellgröße (22) erzeugt, umschaltbar ist und
**dass** eine Logikschaltung (16, 26, 18, 28) den zweiten Regler (23) in den Automatikbetrieb schaltet, falls ein Grenzwert der ersten Stellgröße (12) erreicht wird, und andernfalls den zweiten Regler (23) in den Nachführbetrieb schaltet.

7. Computerprogramm mit durch einen Computer ausführbaren Programmcodeanweisungen zur Implementierung des Verfahrens nach Anspruch 6, wenn das Computerprogramm auf einem Computer ausgeführt wird.

8. Computerprogrammprodukt, insbesondere Datenträger oder Speichermedium, mit einem durch einen Computer ausführbaren Computerprogramm gemäß Anspruch 7.

## Claims

1. Control device (1) for a process, in which a controlled variable (4) can be influenced with the aid of a plurality of different control elements (11, 21) which are based particularly on different physical principles, **characterized in that**
a first controller (13) is arranged upstream from a first control element (11) for generating a first manipulated variable (12) and a second controller (23) is arranged upstream from a second control element (21), which has the same operating direction as the first control element (11), for generating a second manipulated variable (22),
the set point (3) and the controlled variable (4) are fed to the first controller and the second controller (13, 23),
the first controller (13) is in automatic mode as the primary controller and is provided with a manipulated variable limitation device having specified or specifiable limit values for the first manipulated variable (12),
the second controller (23) can be switched between automatic mode and a tracking mode, in which it generates a specified or specifiable constant value of the second manipulated variable (22), and
a logic circuit (16, 26, 18, 28) exists that is configured to switch the second controller (23) into automatic mode if a limit value of the first manipulated variable (12) is reached, and otherwise to switch the second controller (23) into tracking mode.

2. Control device according to Claim 1, **characterized in that** the limit values for the first manipulated variable (12) can be changed as a function of the respective process state or as a function of time.

3. Control device according to Claim 1 or 2, **characterized in that** the second manipulated variable (22) is routed in tracking mode to an input of the second controller (23) for a specified value of the manipulated variable.

4. Control device according to one of the previous claims, **characterized in that** the second controller (23) can be switched manually by an operator in manual mode.

5. Control device according to one of the previous claims, **characterized in that** the second controller (23) is provided with a manipulated variable limitation device having specified or specifiable limit values for the second manipulated variable (22),
the first controller (13) can be switched between automatic mode and a tracking mode, in which it generates a specified or specifiable constant value of the first manipulated variable (12), and
the logic circuit (16, 26, 18, 28) is furthermore configured to switch the second controller (23) into automatic mode, so that it is operated as the primary controller, and to switch the first controller, which then is no longer operated as the primary controller, into automatic mode, if a limit value of the second manipulated variable (22) is reached, and otherwise to switch the first controller (13) into tracking mode.

6. Method for controlling a process, in which a controlled variable (4) can be influenced with the aid of a plurality of different control elements (11, 21), which are based particularly on different physical principles, having a control device in which a first controller (13) is arranged upstream from a first control element (11) for generating a first manipulated variable (12) and a second controller (23) is arranged upstream from a second control element (21), which has the same operating direction as the first control element (11), for generating a second manipulated variable (22), **characterized in that**
the set point (3) and the controlled variable (4) are fed to the first controller and the second controller (13, 23), the first controller (13) works as the primary controller in an automatic mode and is provided with a manipulated variable limitation device having specified or specifiable limit values for the first manipulated variable (12),
the second controller (23) can be switched between automatic mode and a tracking mode, in which it generates a specified or specifiable constant value for the second manipulated variable (22), and
a logic circuit (16, 26, 18, 28) switches the second controller (23) into automatic mode if a limit value of the first manipulated variable (12) is reached, and otherwise switches the second controller (23) into tracking mode.

7. Computer program having program code instructions that are executable by a computer for implementing the method according to Claim 6, if the computer program is executed on a computer.

8. Computer program product, in particular, a data carrier or a storage medium, having a computer program that is executable by a computer according to Claim 7.

## Revendications

1. Dispositif ( 1 ) de régulation d'un processus, dans lequel une grandeur ( 4 ) de régulation peut être influencée à l'aide de plusieurs organes ( 11, 21 ) de réglage différents, qui reposent notamment sur des principes physiques différents, **caractérisé**
**en ce que** l'on monte en amont d'un premier organe ( 11 ) de réglage un premier régulateur ( 13 ) de production d'une première grandeur ( 12 ) de réglage et d'un deuxième organe ( 21 ) de réglage, qui a le même sens d'action que le premier organe ( 11 ) de réglage, un deuxième régulateur ( 23 ) de production d'une deuxième grandeur ( 22 ) de réglage,
**en ce que** l'on envoie la valeur ( 3 ) de consigne et la grandeur ( 4 ) de régulation au premier et au deuxième régulateurs ( 13, 23 ),
**en ce que** le premier régulateur ( 13 ) se trouve comme régulateur primaire dans le fonctionnement en automatique et est pourvu d'un dispositif de limitation de grandeur de réglage ayant des valeurs limites prescrites ou pouvant l'être de la première grandeur ( 12 ) de réglage,
**en ce que** le deuxième régulateur ( 23 ) peut être commuté entre un fonctionnement en automatique et un fonctionnement de poursuite dans lequel il produit une valeur constante donnée à l'avance ou pouvant l'être de la deuxième grandeur ( 22 ) de réglage et
**en ce qu'**il y a un circuit ( 16, 26, 18, 28 ) logigue qui est constitué pour faire passer le deuxième régulateur ( 23 ) dans le fonctionnement en automatique si une valeur limite de la première grandeur ( 12 ) de réglage est atteinte et sinon pour faire passer le deuxième régulateur ( 23 ) dans le fonctionnement en poursuite.

2. Dispositif de régulation suivant la revendication 1, **caractérisé en ce que** les valeurs limites pour la première grandeur ( 12 ) de réglage peuvent être modifiées en fonction de l'état du processus ou du temps.

3. Dispositif de régulation suivant la revendication 1 ou 2, **caractérisé en ce que** l'on envoie la deuxième grandeur ( 22 ) de réglage à une entrée du deuxième régulateur ( 23 ) pour une valeur de prescription de la grandeur de réglage dans le fonctionnement en poursuite.

4. Dispositif de régulation suivant l'une des revendications précédentes, **caractérisé en ce que** le deuxième régulateur ( 23 ) peut être mis à la main en fonctionnement manuelle par un opérateur.

5. Dispositif de régulation suivant l'une des revendications précédentes, **caractérisé en ce que** le deuxième régulateur ( 23 ) est pourvu d'un dispositif de limitation de la grandeur de réglage ayant des valeurs limites données à l'avance ou pouvant l'être de la deuxième grandeur ( 22 ) de réglage,
**en ce que** le premier régulateur ( 13 ) peut être commuté entre un fonctionnement en automatique et un fonctionnement en poursuite, dans lequel il produit une valeur constante donnée à l'avance ou pouvant l'être de la première grandeur ( 12 ) de réglage et
**en ce que** le circuit ( 16, 26, 18, 28 ) logique est constitué, en outre, pour faire passer le deuxième régulateur ( 23 ) en fonctionnement en automatique de manière à ce que celui-ci fonctionne en tant que régulateur primaire ainsi que pour faire passer le premier régulateur, qui ne fonctionne plus alors en régulateur primaire, dans le fonctionnement en automatique si une valeur limite de la deuxième grandeur ( 22 ) de réglage est atteinte et sinon pour faire passer le premier régulateur ( 13 ) dans le fonctionnement en poursuite.

6. Procédé de régulation d'un processus, dans lequel une grandeur ( 4 ) de régulation peut être influencée à l'aide de plusieurs organes ( 11, 21 ) de réglage différents, qui reposent, notamment, sur des principes physiques différents par un dispositif de régulation, dans lequel on monte, en amont d'un premier organe ( 11 ) de réglage, un premier régulateur ( 13 ) de production d'une première grandeur ( 12 ) de réglage et d'un deuxième organe ( 21 ) de réglage, qui a la même direction d'action que le premier organe ( 11 ) de réglage, un deuxième régulateur ( 23 ) de production d'une deuxième grandeur ( 22 ) de réglage, **caractérisé en ce que** l'on envoie la valeur ( 3 ) de consigne et la grandeur ( 4 ) de régulation au premier et au deuxième régulateurs ( 13, 23 ), **en ce que** le premier régulateur ( 13 ) fonctionne comme régulateur primaire dans un fonctionnement en automatique et est pourvu d'un dispositif de limitation de la grandeur de réglage ayant des valeurs limites données à l'avance ou pouvant l'être de la première grandeur ( 12 ) de réglage,
**en ce que** le deuxième régulateur ( 23 ) peut être commuté entre un fonctionnement en automatique et un fonctionnement en poursuite, dans lequel il produit une valeur constante donnée à l'avance ou pouvant l'être de la deuxième grandeur ( 22 ) de réglage et
**en ce qu'**un circuit ( 16, 26, 18, 28 ) logique met le deuxième régulateur ( 23 ) en fonctionnement en automatique si une valeur limite de la première grandeur ( 12 ) de réglage est atteinte et sinon met le deuxième régulateur ( 23 ) en fonctionnement en poursuite.

7. Programme d'ordinateur ayant des instructions de cote de programmes pouvant être exécuté par un ordinateur pour la mise en oeuvre du procédé suivant la revendication ( 6 ) lorsque le programme d'ordinateur est exécuté sur un ordinateur.

8. Produit de programme d'ordinateur, notamment, support de données ou support de mémoires ayant un programme d'ordinateur pouvant être exécuté par un ordinateur suivant la revendication 7.
